(19) **Europäisches Patentamt**
**European Patent Office**
**Office européen des brevets**

(11) **EP 0 830 771 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(21) Anmeldenummer: **96916152.0**

(22) Anmeldetag: **23.05.1996**

(51) Int Cl.:
***H04L 27/26*** *(2006.01)*     ***H04L 5/06*** *(2006.01)*

(86) Internationale Anmeldenummer:
**PCT/EP1996/002209**

(87) Internationale Veröffentlichungsnummer:
**WO 1996/041458 (19.12.1996 Gazette 1996/55)**

(54) **VERFAHREN UND SCHALTUNGSANORDNUNG ZUR VERBESSERUNG DER TRÄGERTRENNUNG BEI DER ÜBERTRAGUNG VON OFDM SIGNALEN**

METHOD AND CIRCUIT ARRANGEMENT FOR IMPROVING CARRIER SEPARATION FOR THE TRANSMISSION OF OFDM SIGNALS

PROCEDE ET CIRCUIT DESTINES A AMELIORER LA SEPARATION DES PORTEUSES LORS DE LA TRANSMISSION DE SIGNAUX OFDM

(84) Benannte Vertragsstaaten:
**AT CH DE ES FR GB IT LI NL SE**

(30) Priorität: **07.06.1995 DE 19520353**

(43) Veröffentlichungstag der Anmeldung:
**25.03.1998 Patentblatt 1998/13**

(73) Patentinhaber: **THOMSON Licensing**
**92100 Boulogne-Billancourt (FR)**

(72) Erfinder:
- **MUSCHALLIK, Claus**
  **D-78050 Villingen-Schwenningen (DE)**
- **ARMBRUSTER, Veit**
  **D-78112 St. Georgen (DE)**

(74) Vertreter: **Hartnack, Wolfgang**
**Deutsche Thomson-Brandt GmbH**
**European Patent Operations**
**Karl-Wiechert-Allee 74**
**30625 Hannover (DE)**

(56) Entgegenhaltungen:
**EP-A- 0 441 732**      **EP-A- 0 562 868**
**EP-A- 0 613 267**

- **IEEE TRANSACTIONS ON COMMUNICATION TECHNOLOGY, Bd. 19, Nr. 5, 1.Oktober 1971, Seiten 628-634, XP000568061 WEINSTEIN S. B. ET AL.: "DATA TRANSMISSION BY FREQUENCY-DIVISION MULTIPLEXING USING THE DISCRETE FOURIER TRANSFORM"**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Schaltungsanordnung zur Verbesserung des Empfangsverhaltens bei der Übertragung von digitalen Signalen.

Stand der Technik

Bei dem OFDM-Verfahren (Orthogonaly Frequency Division Multiplexing) wird nicht ein Träger für jedes Programm verwendet, sondern eine Vielzahl modulierter Träger, die im Frequenzmultiplex übertragen werden. Die Modulationsart kann z. B. eine QPSK, eine 64QAM oder auch eine andere digitale Modulationsart sein. Die Frequenzen der N Träger weisen äquidistante Abstände $f_{tr}$ auf und werden derart gewählt, daß sie ein orthogonales Funktionensystem bilden. Durch die hohe Trägeranzahl ergibt sich hierbei ein Spektrum mit einer fast rechteckigen Form, sodaß das OFDM-Signal im benutzten Band eine konstante Leistungsdichte aufweist, ähnlich wie beim bandbegrenzten weißen Rauschen.

Die Programmsignale werden in Symbole der Dauer $T_S=1/f_{tr}$ zerlegt und auf die N verschiedenen Trägerfrequenzen verteilt. Hierbei wird jedem OFDM-Symbol ein Guard-Intervall der Länge $T_g$ zugewiesen, in dem ein Teil des Symbols wiederholt wird, um das Signal gegen Echos unempfindlich zu machen.

Um die Träger im Empfänger wieder voneinander zu trennen, wird eine Fast-Fourier-Transformation (FFT) der Länge N durchgeführt, wobei jeder Träger dann sauber von den anderen getrennt werden kann, wenn die Träger exakt orthogonal zueinander sind.

Die Trägerorthogonalität kann jedoch durch verschiedene Ursachen gestört werden. So kann eine Frequenzabweichung der Träger oder eine Verbreiterung der Träger durch Phasenrauschen erfolgen. Die Orthogonalität wird auch gestört, falls Frequenzanteile vorhanden sind, die zwischen den Trägern liegen. Dieses kann durch weißes Rauschen oder eine harmonische Störung, deren Frequenz nicht mit einer Trägerfrequenz übereinstimmt, verursacht werden.

Ferner muß im Empfänger das Nutzsignal von den unerwünschten Nachbarkanalsignalen durch eine analoge oder digitale Filterung getrennt werden. Füllt das Nutzsignal den gesamten Kanal bis zu den Bandgrenzen aus, so erfordert der geringe Abstand zweier benachbarter Signale zur Trennung sehr steile Filter, die einen hohen Aufwand des Systems erfordern. Das Abschalten von mehreren Trägern an den Bandgrenzen zur Vergrößerung des Abstandes kann nur bedingt Abhilfe schaffen.

In beiden Fällen tritt eine Integration aller Frequenzanteile auf (Leckeffekt der FFT), die zu einer deutlichen Zunahme der Störungen im jeweiligen OFDM-Empfanger führen kann.

Die EP-A-613267 offenbart zur Verbesserung des Empfangsverhaltens bei einer OFDM-Übertragung im Sender bei einer inversen FFT der länge 2N jeden zweiten Eingang auf Null zu setzen.

Erfindung

Der Erfindung liegt die Aufgabe zugrunde, ein Verfahren zur Verbesserung des Empfangsverhaltens bei der Übertragung von digitalen Signalen durch eine saubere Träger-trennung anzugeben. Diese Aufgabe wird durch das in Anspruch 1 angegebene Verfahren gelöst.

Der Erfindung liegt die weitere Aufgabe zugrunde, eine Schaltungsanordnung zur Anwendung des erfindungsgemäßen Verfahrens anzugeben. Diese Aufgabe wird durch die in Anspruch 4 angegebene Schaltungsanordnung gelöst.

Zur Verbesserung der Trennung der N Träger kann die Selektivität der FFT-Filterung durch eine Vergrößerung der Anzahl der FFT-Komponenten erhöht werden. Dieses führt jedoch normalerweise zu einer unerwünscht starken Zunahme des Rechenaufwandes, da die Länge der FFT und damit die Anzahl der berechneten Koeffizienten ein ganzzahliges Vielfaches von N betragen muß. Durch die erfindungsgemäße Ausgestaltung des im Rahmen der FFT verwendeten Zeitfensters ist es jedoch möglich, auf die Berechnung eines Teils der Koeffizienten zu verzichten. Die Implementation des Fensters kann hierbei, je nach Sendesignal und Sendebedingungen, adaptiv an die Sendeverhältnisse mit Hilfe einer Schätzung der Kanaleigenschaften angepaßt werden.

Bei der Träger-trennung kann die FFT nach dem prinzip der Reduktion im Frequenzbereich (decimation-in-frequency) durchgeführt werden, so daß nur die erste Stufe einer FFT mit allen Koeffizienten berechnet werden muß. Die weiter verwendeten Koeffizienten werden dann entsprechend einer normalen N-FFT berechnet. Damit ist die Aufwandserhöhung für ein großes N minimal.

Im Prinzip besteht das erfindungsgemäße Verfahren zur Verbesserung des Empfangsverhaltens bei der Übertragung von digitalen Signalen, wobei für die Übertragung die digitalen Signale in Symbole der Dauer $T_S$ zerlegt werden und jedem Symbol ein Guard-Intervall zugewiesen wird und diese auf N verschiedene Trägerfrequenzen verteilt werden und wobei das übertragene Signal in einem Empfänger einer Fouriertransformation unterzogen wird, darin, daß für die Symbole neue Symbole der Dauer $M_1{*}T_S$ erzeugt werden und bei der Fouriertransformation nach einer Abtastung des Signals eine Multiplikation mit Zeitfenstern der Breite $M_1{*}T_S$ erfolgt, wobei die Länge der Fouriertransformation $M_1{*}N$ beträgt und durch die Fouriertransformation jeder $M_1$-te Koeffizient berechnet wird.

Vorzugsweise werden die Symbole um die Dauer $T_v$ verlängert und damit verlängerte Symbole erzeugt, Abtastwerte vor und hinter den verlängerten Symbolen zu-Null gesetzt, um damit die neuen Symbole zu erzeugen, und die Zeitfenster jeweils aus einem Nyquist-Fenster und einem zu-Null gesetzen Bereich gebildet.

Vorteilhaft wird die Anzahl der zu-Null gesetzten Abtastwerte so gewählt, daß die Dauer der neuen Symbole $2*T_S$ beträgt, das Nyquist-Fenster die Nyquistpunkte bei $T_S/2$ und $3T_S/2$ aufweist, die Länge der Fouriertransformation $2*N$ beträgt und nur jeder 2-te Koeffizient berechnet wird.

Vorteilhaft werden die neuen Symbole aus den Symbolen und einem Teil der Guard-Intervalle gebildet.

Besonders vorteilhaft wird in dem Empfänger die aktuell maximal nutzbare Länge der Guard-Intervalle berechnet, um eine Längenanpassung der zur Bildung der neuen Symbole benutzten Teile der Guard-Intervalle zu ermöglichen.

Im Prinzip besteht die erfindungsgemäße Schaltungsanordnung für ein Verfahren zur Verbesserung des Empfangsverhaltens bei der Übertragung von digitalen Signalen , bei der die übertragenen Signale einer ersten Einheit zugeführt werden, in der eine Abtastung der Signale und eine Umwandlung in I/Q-Signale erfolgt, eine Frequenzanpassung der I/Q-Signale mit Hilfe einer Frequenzmischungseinheit erfolgt und in einem Prozessor die Trennung der N Trägerfrequenzen durchgeführt wird, darin, daß im Prozessor neue Symbole der Dauer $M_1*T_S$ erzeugt werden, eine Fensterung mit Zeitfenstern der Breite $M_1*T_S$ erfolgt, eine Fouriertransformation der Länge $M_1*N$ durchgeführt wird und nur der $1/M_1$-Teil der Koeffizienten berechnet wird.

Vorteilhaft wird zur Erzeugung der neuen Symbole die aktuell maximal nutzbare Länge der Guard-Intervalle von einer Detektoreinheit bestimmt.

Vorteilhaft besteht die erste Einheit aus einem A/D-Wandler und einem digitalen Filter.

Vorzugsweise sind $M_1$ und $M_2$ natürliche Zahlen, insbesondere Potenzen von 2.

Zeichnungen

Anhand der Zeichnungen werden Ausführungsbeispiele der Erfindung beschrieben. Diese zeigen in:

Fig. 1   ein OFDM-Signal (A), ein Rechteck-Zeitfenster (B), sowie das zugehörige Koeffizienten-Spektrum (C),

Fig. 2   das der 2N-FFT aus Fig. 1 entsprechende Filterverhalten,

Fig. 3   ein OFDM-Signal (A), ein Nyquist-Zeitfenster (B), sowie das zugehörige Koeffizienten-Spektrum (C),

Fig. 4   das der 2N-FFT entsprechende Filterverhalten für verschiedene roll-off-Faktoren,

Fig. 5   ein Vergleich der Störungen bei einer herkömmlichen (A) und der erfindungsgemäßen FFT (B),

Fig. 6   die Nachbarkanalfilterung mit leichter analoger Filterung (oben), Überabtastung und Bildung einer 2N-FFT (unten),

Fig. 7   die Vereinfachung einer 4N-FFT zu einer N-FFT mit einem 4-radix Algorithmus,

Fig. 8   ein Blockschaltbild einer erfindungsgemäßen Schaltungsanordnung,

Ausführungs-Beispiel

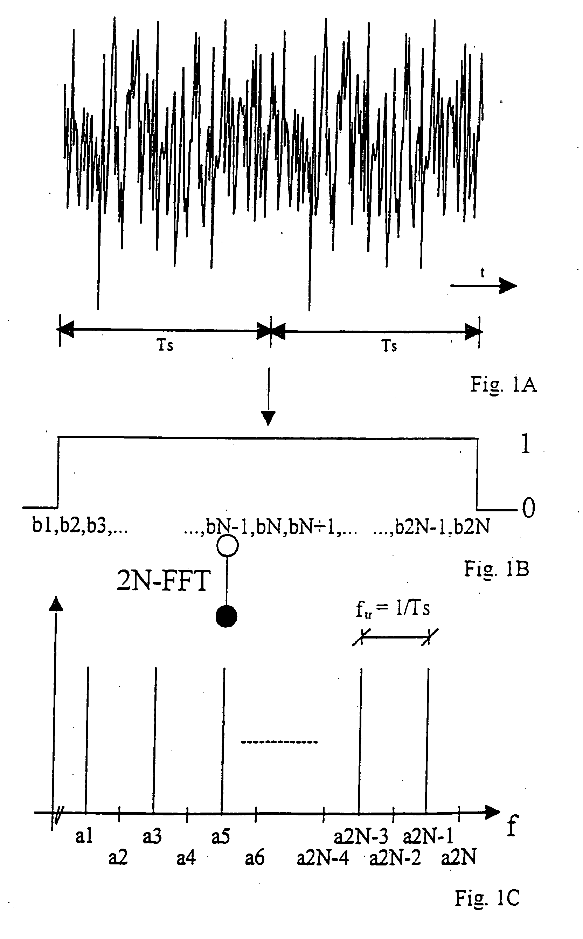

In Fig. 1 ist ein erfindungsgemäßes Verfahren zur Verbesserung der Trägertrennung dargestellt. Das Spektrum des OFDM-Signals weist im Zeitbereich einen scheinbar rauschartigen Verlauf auf, wie in Fig. 1A dargestellt. Es wird nun eine Erhöhung der Dauer eines Symbols auf das doppelte (oder $2^n$-fache) im Sender z.B. durch Verlängerung des Guard-Intervalls durchgeführt. Aus diesem Signal werden 2N Abtastwerte $b_1, b_2, b_3, ..., b_{2N-1}, b_{2N}$ abgetastet, wobei die Abtastwerte entsprechend Fig. 1B mit einem Zeitfenster multipliziert werden, um die einzelnen Symbole voneinander zu trennen. Das rechteckige Zeitfenster hat hierbei eine Länge von 2.Ts. Innerhalb dieser Zeit berechnet eine FFT der Länge 2N aus den Abtastwerten die 2N komplexen Koeffizienten $a_1, a_2, a_3, ... a_{2N-1}, a_{2N}$. Diese Koeffizienten enthalten die im Sender modulierte Information jedes einzelnen Trägers, wobei, wie in Fig. 1C gezeigt, von den 2N Koeffizienten nur die Koeffizienten $a_1, a_3, a_5, a_7, ..., a_{2N-1}$ relevante Information enthalten. Die restlichen Koeffizienten werden nicht benötigt, so daß ihre Berechnung nicht erfolgen muß.

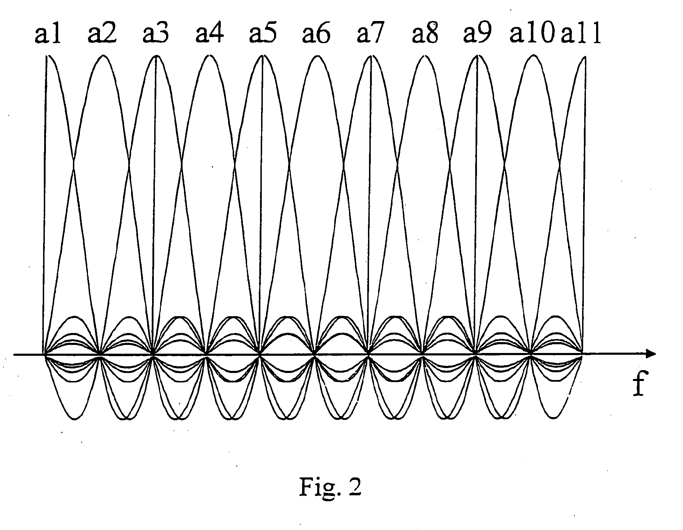

Das Filterverhalten der 2N-FFT verdeutlicht Fig. 2. Eine Trägerinformation beinhaltet nur jeder zweite Koeffizient. Das bedeutet für die FFT, wie schon zu Fig. 1 beschrieben, daß nur diese Hälfte der Koeffizienten berechnet werden muß, die andere Hälfte muß dagegen nicht berücksichtigt werden. Für jeden Träger hat das Filterverhalten die Form einer sin(x)/(2Nx) Funktion. Jede Funktion entspricht damit einem Filter, das einen der N Träger ohne Verluste durchläßt, die anderen dagegen aus dem Signal herausfiltert. Das absolute Maximum einer jeden Funktion stimmt hierbei mit den Nulldurchgänge der übrigen Filter überein. Die Maxima der Filter weisen einen reduzierten Abstand von $f_{tr}/2$ auf und die Anzahl der Filter ist doppelt so groß wie bei einer N-FFT. Insbesondere sind die Durchlaßbereiche der jeweiligen Filter nur halb so breit wie bei einer N-FFT. Dieses bewirkt eine Verbesserung des Störabstandes, da:

- falls weißes Rauschen vorhanden ist, nur die Hälfte der Rauschleistung pro Träger im Vergleich zum herkömmlichen Fall integriert wird. Dieses führt zu einer Verbesserung des Störabstands um 3dB.
- und falls ein harmonischer Störer im Bereich eines Filtermaximum auftritt, bei dem kein Träger vorhanden ist, dieser Störanteil vom Nutzsignal sogar vollständig ausgefiltert wird.

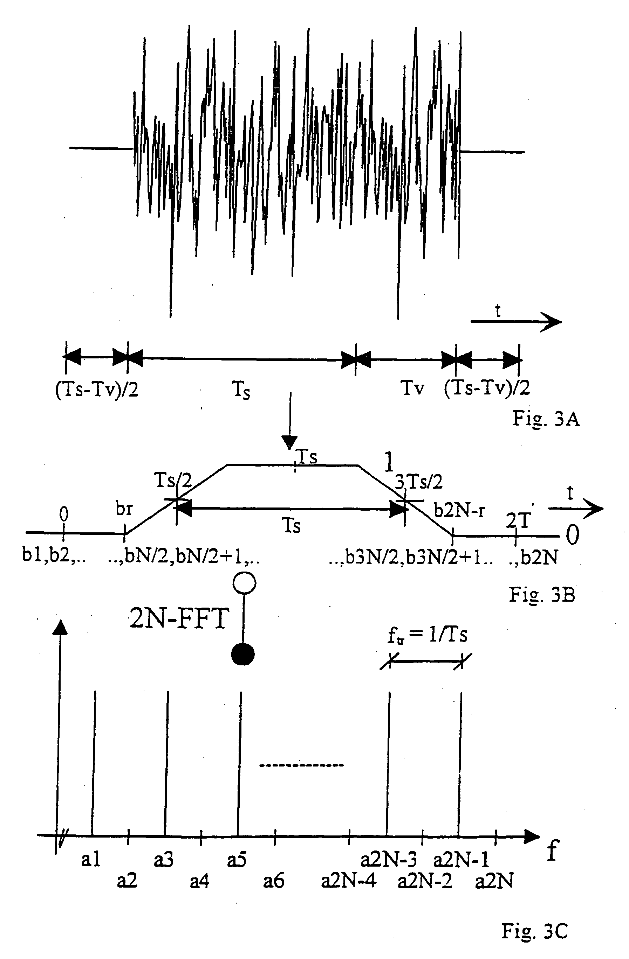

Die erfindungsgemäße Verwendung einer Nyquist-Fensterung zur Trägertrennung ist in Fig. 3 dargestellt. Das vorhandene Symbol der Dauer $T_s$ wird um die Zeit $T_v$ verlängert, wobei $T_v$ beliebig variiert werden kann und ein Teil des Guard-Intervalls $T_g$ ist ($T_v < T_g$) mit z.B. $T_g/T_s$ 1:4. Insbesondere kann $T_v$, falls die Übertragung nur kurze Echos aufweist, entsprechend lang gewählt werden. Die Abtastwerte $b_{r+1}, b_{r+2}, ... b_{2N-r}$ werden durch Abtastung des Nutzsymbols $T_S$ und der Symbolverlängerung $T_V$ gewonnen. Die Werte $b_1, b_2, .., b_r$ und $b_{2N-r}, ... b_{2N}$ sind gleich Null. Das so erhaltene neue Symbol $S_n$ setzt sich folgendermaßen zusammen:
Neues Symbol= Nullen+ altes Symbol+Symbolverlängerung+ Nullen.
Damit ergibt sich entsprechend Fig. 3A für die Dauer des neuen Symbols:

$$(T_S - T_V)/2 \; + \; T_S \; + \; T_V \; + \; (T_S - T_V)/2 \; = \; 2T_S$$

Somit kann ein Nyquistfenster benutzt werden, das symmetrisch um die Symbolmitte ist. Die Fensterung kann z.B. als Kosinus roll-off ausgelegt werden, andere Nyquist-Fenster (Dreieck, Trapez u.a.m.) sind jedoch ebenso anwendbar. Die "Nyquistzeit", in Analogie zur Nyquistfrequenz, liegt bei $1/2T_s$ und $3/2T_s$, wie in Fig. 3B dargestellt. Alle 2N Abtastwerte werden mit einer 2N-FFT transformiert, um 2N Koeffizienten zu erhalten. Auch hier muß jedoch, wie in Fig. 3C gezeigt, nur eine Hälfte der Koeffizienten berechnet werden.

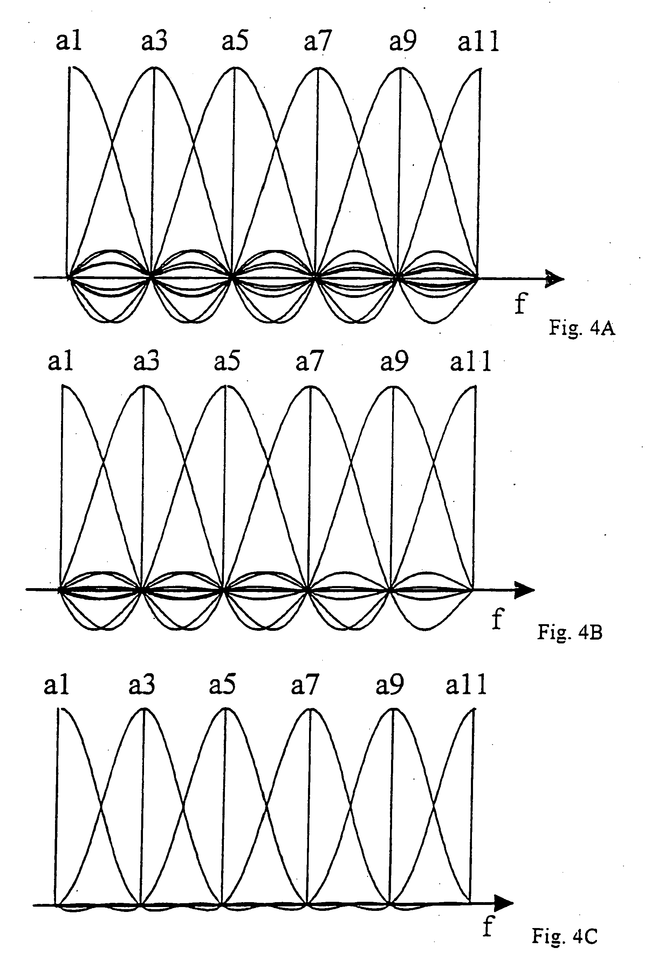

Fig. 4 zeigt das Filterverhalten der 2N-FFT mit Nyquist-Fensterung. Auch hier treten doppelt so viele Filter wie bei einer N-FFT auf, wobei die Trägerinformation in den Koeffizienten $a_1, a_3, a_5, a_7, ... a_{2N}$ enthalten ist. Da die restlichen Koeffizienten nicht berücksichtigt werden müssen, sind diese und die entsprechenden Filter gerader Ordnung zur Erhöhung der Übersichtlichkeit in der Figur nicht dargestellt. Durch die Nyquist-Fensterung (Fig. 4C), d.h. kosinus roll-off gleich 1, klingen die Überschwinger der Filterfunktion viel früher ab als bei einem kosinus roll-off gleich 0.5 (Fig. 4B), oder einem Rechteckfenster (Fig. 4A), entsprechend kosinus roll-off gleich 0.
Die Nyquistfensterung hat damit folgende Vorteile:

- Verbesserung des Störabstandes beim Auftreten von weißem Rauschen bis zu 1.2dB, abhängig vom gewählten roll-off Faktor.
- Verringerung des Störabstandes, falls ein diskreter Störer im Nutzband vorhanden ist, wobei die betroffenen Träger weniger gestört und weniger Nachbarträger beeinflußt werden.
- Verbesserung des Störabstandes falls eine Frequenzabweichung oder Phasenrauschen vorhanden ist.

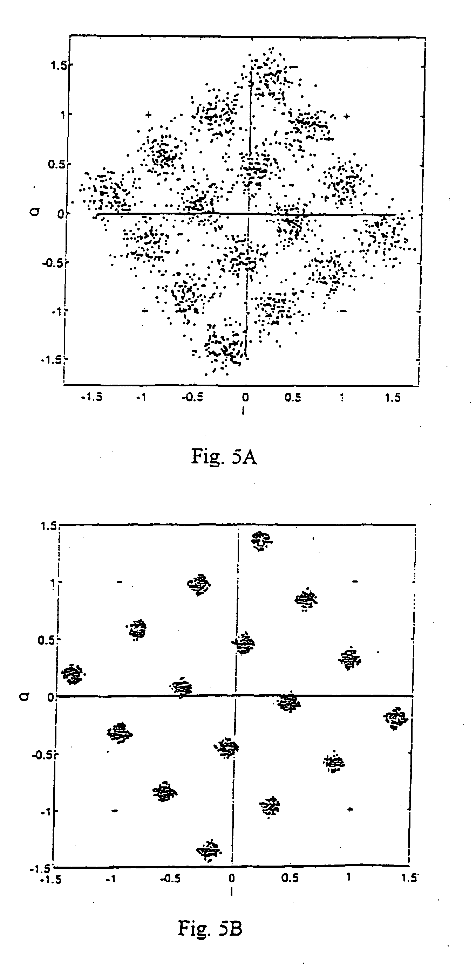

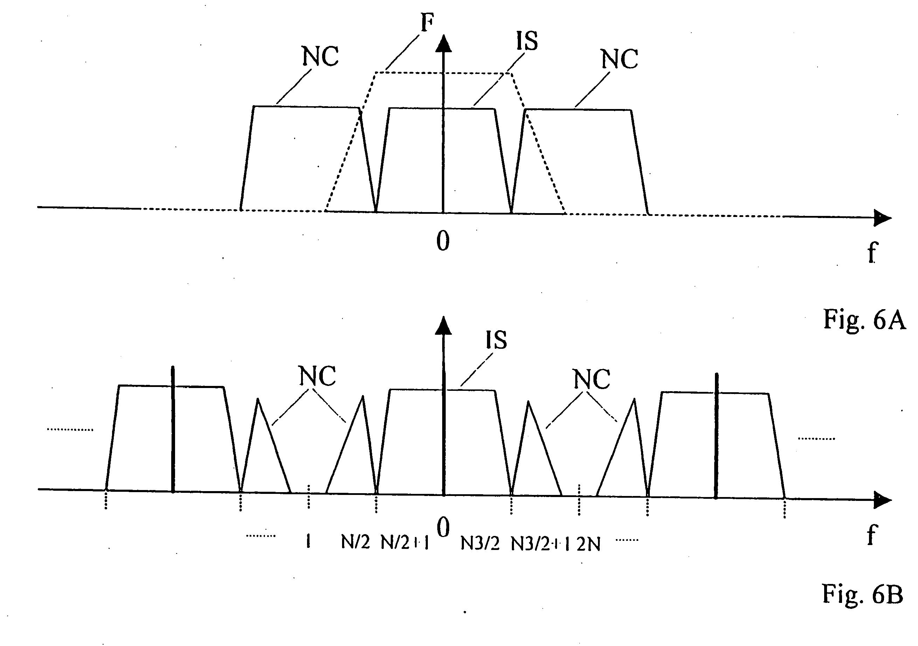

Die Verbesserung des Störabstandes am Beispiel des Auftretens von Frequenzabweichungen kann Fig. 5 entnommen werden. In dieser werden für eine 16QAM bei der Verwendung von 2048 Trägern Vektordiagramme für eine herkömmliche N-FFT (A) und eine erfindungsgemäße 2N-FFT mit Nyquist-Fensterung und roll-off=1 (B) gegenübergestellt. Jeder Punkt entspricht hierbei in den Diagrammen einem Träger . Für die herkömmliche N-FFT ist eine deutliche Streuung der Träger um die jeweiligen Sollwerte zu erkennen, die für das erfindungsgemäße Verfahren merklich abnimmt.
Die Nachbarkanalfilterung wird in Fig. 6 erläutert. Der Nutzsignal-Kanal IS und die Nachbar-Kanäle NC grenzen hierbei unmittelbar aneinander. Das OFDM-Nutzsignal wird im Basisbandbereich mit einem anti-Aliasing-Filter, einer relativ einfachen analogen Filterung, selektiert und dann abgetastet. Die gestrichelte Linie F kennzeichnet hierbei die Frequenzcharakteristik der Filterung. Das Signal wird anschließend mit einer einfachen Überabtastung A/D umgesetzt. Von dem überabgetasteten Signal wird eine FFT der Länge 2N gebildet. Die N Koeffizienten 1 bis N/2 bzw. N3/2+1 bis 2N enthalten keine Nutzinformation, sondern die Störung der Nachbarkanäle. Diese Koeffizienten brauchen daher nicht berechnet zu werden, sodaß die Komplexität der 2N-FFT wesentlich vereinfacht wird. Dagegen enthalten die N Koeffizienten N/2+1 bis N3/2 die Nutzinformation und werden für die weitere Verarbeitung benutzt. Für ein OFDM Nachbarsignal mit einer dem Nutzsignal entsprechenden Leistung ist diese Filterung durch Überabtastung und Verdopplung der FFT ausreichend. Will man jedoch die Auswirkung des Leckeffekts verringern und damit die Filterwirkung erhöhen, kann die Kanalfilterung mit der oben beschriebenen Fensterung kombiniert werden. Die Fensterung erfordert dann eine nochmalige Verdopplung der Anzahl der FFT-Koeffizienten, jedoch ohne nochmalige Überabtastung, sodaß sich 4N Abtastwerte ergeben. Der Aufwand der 4N-FFT gegenüber einer N-FFT ist hierbei jedoch nur geringfügig höher, da nur ein Viertel der Koeffizienten zu Ende berechnet werden müssen.

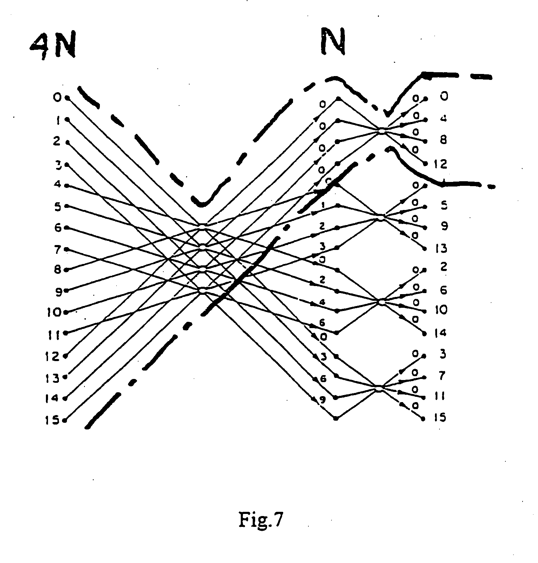

So ist z.B. bei Verwendung eines 4-Radix-Algorithmus zur Berechnung der 4N-FFT nach den ersten komplexen Multiplikationen der Aufwand gleich dem einer N-FFT. Dieses ist in Fig. 7 für ein einfaches Beispiel mit N=16 dargestellt. Die ursprüngliche Fouriertransformation mit N=16 wird hierbei in der ersten Stufe der FFT in eine Linearkombination von vier Fouriertransformationen mit jeweils N=4 (offene Kreise) aufgeteilt, um durch eine Herabsetzung der Multiplikationsoperationen den nötigen Zeitaufwand zu reduzieren. Nur eine dieser N=4 Fouriertransformationen muß dann berechnet werden, wie dieses durch den gestrichelten Bereich angedeutet ist, da nur jeder vierte Koeffizient benötigt wird.

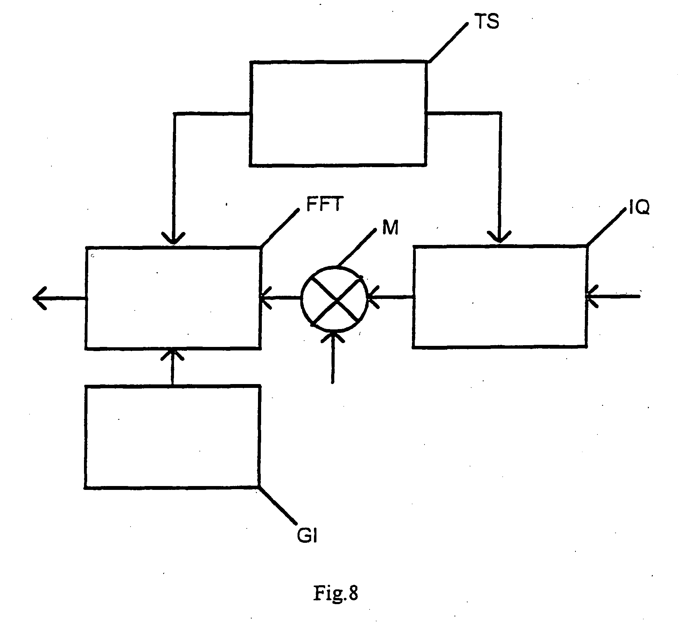

Ein Blockschaltbild einer erfindungsgemäßen Schaltungsanordnung zeigt Fig. 8. Nach einer Konversion des übertragenen OFDM-Signals in das Basisband werden die digitalen Signale einer ersten Einheit IQ zugeführt, in der eine Abtastung der übertragenen OFDM-Signale mit Hilfe eines A/D-Wandlers erfolgt. Zusätzlich enthält diese Einheit bei dem Verfahren zur Verbesserung der Trägertrennung einen digitalen Filter (FIR-Filter) zur Erzeugung von I/Q-Signalen. Bei Durchführung des Verfahrens zur Verbesserung der Kanaltrennung kann durch eine Überabtastung des OFDM-Signals im A/D-Wandler, die $M_2*N$ Abtastwerte ergibt, auf die FIR-Filterung verzichtet werden. Mit Hilfe einer Frequenzmischungseinheit M erfolgt dann eine Frequenzanpassung der I/Q-Signale, bevor in einem Prozessor FFT die Trennung der Trägerfrequenzen durchgeführt wird. Hierfür wird eine Schnelle Fouriertransformation durchgeführt, wobei zur Verbesserung der Trägertrennung eine Fensterung mit Zeitfenstern der Breite $M_1*T_S$ und eine Symbolverlängerung auf eine Symbollänge von $M_1*T_S$ erfolgt. Die Länge der FFT wird entsprechend der Symbollänge und/oder der eventuell durchgeführten Überabtastung angepaßt und beträgt damit $M_1*N$, $M_2*N$ bzw. bei der gleichzeitigen Durchführung beider Verfahren $M_1*M_2*N$. Entsprechend wird im Prozessor nur der $1/M_1$-, $1/M_2$- bzw. der $1/(M_1*M_2)$-te Teil der Koeffizienten berechnet. Zur Erzeugung der neuen Symbole wird dem Prozessor FFT die aktuell maximal nutzbare Länge der Guard-Intervalle von einer Detektoreinheit GI mitgeteilt, die aus dem empfangenen OFDM-Signal in bekannter Weise die Länge der Echos und der Guard-Intervalle ermittelt. Die Synchronisierung der Konversionseinheit IQ und des Prozessors FFT erfolgt durch eine Synchronisierungseinheit TS.

Die Erfindung kann z.B. in Decodern für DAB oder digital terrestrisches Fernsehen verwendet werden.

**Patentansprüche**

1. Verfahren zur Verbesserung des Empfangsverhaltens bei der Übertragung von digitalen Signalen, wobei für die Übertragung die digitalen Signale in Symbole der Dauer $T_S$ zerlegt werden und jedem Symbol ein Guard-Intervall zugewiesen wird und diese auf N verschiedene Trägerfrequenzen verteilt werden und wobei das übertragene Signal in einem Empfänger einer Fouriertransformation unterzogen wird, wobei nach einer Abtastung des Signals eine Multiplikation mit Zeit fenstern der Breite $M_1*T_S$ mit $M_1$ größer 1 erfolgt und die Länge der Fouriertransformation $M_1*N$ beträgt, **dadurch gekennzeichnet, daß** im Empfänger für die senderseitigen Symbole neue Symbole der Dauer $M_1*T_S$ definiert werden und die neuen Symbole aus den senderseitigen Symbolen und einem Teil der Guard-Intervalle gebildet werden und die aktuell maximal nutzbare Länge der Guard-Intervalle bestimmt wird, um eine adaptive Längenanpassung der zur Bildung der neuen Symbole benutzten Teile der Guard-Intervalle an die Senderverhältnisse zu ermöglichen und daß durch die Fouriertransformation nur jeder $M_1$-te Koeffizient berechnet wird.

2. Verfahren nach Anspruch 1, **dadurch gekennzeichnet, daß**

   - die Symbole um die Dauer $T_V$ verlängert werden und damit verlängerte Symbole definiert werden,
   - Abtastwerte vor und hinter den verlängerten Symbolen zu-Null gesetzt werden und damit die neuen Symbole definiert werden,
   - die Zeitfenster jeweils aus einem Nyquist-Fenster und einem zu-Null gesetzen Bereich gebildet werden.

3. Verfahren nach Anspruch 2, **dadurch gekennzeichnet, daß**

   - die Anzahl der zu-Null gesetzten Abtastwerte so gewählt wird, daß die Dauer der neuen Symbole jeweils $2*T_S$ beträgt,
   - das Nyquist-Fenster die Nyquistpunkte bei $T_S/2$ und $3T_S/2$ aufweist,
   - die Länge der Fouriertransformation $2*N$ beträgt
   - und nur jeder 2-te Koeffizient durch geeignete Wahl des FFT-Algorithmus berechnet wird.

4. Schaltungsanordnung zur Verbesserung des Empfangsverhaltens bei der Übertragung von digitalen Signalen , mit einem Prozessor (FFT), in dem die Trennung der N Trägerfrequenzen durchgeführt wird, wobei eine Fensterung mit Zeitfenstern der Breite $M_1 * T_S$ mit $M_1$ größer 1 und eine Fouriertransformation der Länge $M_1 * N$ durchgeführt werden, **dadurch gekennzeichnet, daß** ferner eine erste Einheit (IQ) zur Abtastung und Umwandlung in I/Q-Signale, der die übertragenen Signale im Empfänger zugeführt werden, eine Frequenzmischungseinheit (M) zur Frequenzanpassung und eine Detektoreinheit (GI), durch welche die zur Erzeugung der neuen Symbole aktuell maximal nutzbare Länge der Guard-Intervalle bestimmt wird, um eine adaptive Längenanpassung der zur Bildung der neuen Symbole benutzten Teile der Guard-Intervalle an die Sendeverhältnisse im Empfänger zu ermöglichen, wobei neue Symbole der Dauer $M_1 * T_S$ erzeugt werden und durch geeignete Wahl des FFT-Algorithmus nur jeder $M_1$-te Koeffizient berechnet wird, vorgesehen ist.

5.  Schaltungsanordnung nach Anspruch 4, **dadurch gekennzeichnet, daß** die erste Einheit (IQ) aus einem A/D-Wandler und einem digitalen Filter besteht.

## Claims

1.  Method for improving reception in the transmission of digital signals, in which, for transmission, the digital signals are decomposed into symbols of duration $T_s$ and a guard interval is assigned to each symbol and the symbols are distributed over N different carrier frequencies, and in which a Fourier transform of the transmitted signal is undertaken in a receiver, and in which, after sampling of the signal, multiplication with time windows of width $M_1 * T_s$, where $M_1$ is greater than 1, takes place and the length of the Fourier transform is $M_1 * N$, **characterized in that**, in the receiver for the transmitter side symbols, new symbols of duration $M_1 * T_S$ are defined and the new symbols are formed from the transmitter side symbols and a fraction of the guard intervals, and the current maximum useful length of the guard intervals is determined, in order to make it possible for the length of the guard-interval fractions used for forming the new symbols to be matched adaptively to the transmission conditions, and **in that** only every $M_1$-th coefficient is calculated by the Fourier transform.

2.  Method according to Claim 1, **characterized in that**:

    - the symbols are lengthened by the duration $T_v$, and lengthened symbols are thereby defined,
    - samples before and after the lengthened symbols are set to zero, and the new symbols are thereby defined,
    - the time windows are each formed by a Nyquist window and a region set to zero.

3.  Method according to Claim 2, **characterized in that**:

    - the number of samples which are set to zero is selected in such a way that the duration of the new symbols is in each case $2 * T_s$,
    - the Nyquist window has the Nyquist points at $T_s/2$ and $3T_s/2$,
    - the length of the Fourier transform is $2 * N$
    - and only every 2nd coefficient is calculated by suitable selection of the FFT algorithm.

4.  Circuit arrangement for improving reception when digital signals are being transmitted, having a processor (FFT) in which the separation of the N carrier frequencies is carried out, windowing with time windows of width $M_1 T_s$, where $M_1$ is greater than 1, and a Fourier transform of length $M_1 * N$ being carried out, **characterized by** the further provision of a first unit (IQ) which is intended for sampling and conversion into I/Q signals and to which the transmitted signals are fed in the receiver, a frequency mixing unit (M) for frequency matching, and a detector unit (GI), with which the current maximum usable guard-interval length for producing the new symbols is determined, in order to make it possible for the length of the guard-interval fractions used for forming the new symbols to be matched adaptively to the transmission conditions in the receiver, new symbols of duration $M_1 * T_s$ being produced and only every $M_1$-th coefficient being calculated through suitable selection of the FFT algorithm.

5.  Circuit arrangement according to Claim 4, **characterized in that** the first unit (IQ) consists of an A/D converter and a digital filter.

## Revendications

1.  Procédé destiné à améliorer le comportement de réception lors de la transmission de signaux numériques, où, pour la transmission, les signaux numériques sont décomposés en symboles de durée $T_S$ et un intervalle de garde est attribué à chaque symbole et ces derniers sont répartis sur N fréquences porteuses différentes, et où le signal transmis est soumis à une transformée de Fourier dans un récepteur, où, après un échantillonnage du signal, une multiplication avec des fenêtres temporelles de largeur $M_1{}^*{}_{TS}$, où $M_1$ est supérieur à 1, a lieu et la longueur de la transformée de Fourier s'élève à $M_1{}^*N$, **caractérisé en ce que**, dans le récepteur, pour les symboles côté émission, de nouveaux symboles de durée $M_1{}^*T_S$ sont définis et les nouveaux symboles sont formés à partir des symboles côté émission et d'une fraction des intervalles de garde, et la longueur utile maximale actuelle des intervalles de garde est déterminée, afin de rendre possible une correspondance adaptative de la longueur des fractions des intervalles de garde utilisées pour la formation des nouveaux symboles aux conditions d'émission, et qu'uniquement chaque $M_1$-ème coefficient est calculé par la transformée de Fourier.

2. Procédé selon la revendication 1, **caractérisé en ce que**

   - les symboles sont allongés par la durée $T_v$ et les symboles allongés sont ainsi définis,
   - les valeurs d'échantillonnage avant et après les symboles allongés sont définies sur zéro et les nouveaux symboles sont ainsi définis,
   - les fenêtres temporelles sont chacune formées à partir d'une fenêtre Nyquist et d'une région définie sur zéro.

3. Procédé selon la revendication 2, **caractérisé en ce que**

   - le nombre de valeurs d'échantillonnage définies sur zéro est sélectionné de telle manière que la durée des nouveaux symboles s'élève dans chaque cas à $2{}^*T_S$,
   - la fenêtre Nyquist possède les points Nyquist au niveau de $T_S/2$ et $3T_S/2$,
   - la longueur de la transformée de Fourier s'élève à $2{}^*N$,
   - et uniquement chaque 2ème coefficient est calculé par une sélection adaptée de l'algorithme FFT.

4. Circuit destiné à améliorer le comportement de réception lors de la transmission de signaux numériques, doté d'un processeur (FFT) dans lequel la séparation des N fréquences porteuses est réalisée, où un fenêtrage avec des fenêtres temporelles de largeur $M_1{}^*T_S$, où $M_1$ est supérieur à 1, et une transformée de Fourier de longueur $M_1{}^*N$ sont réalisés, **caractérisé en ce qu'**il est en outre prévu une première unité (IQ) pour l'échantillonnage et la conversion en signaux I/Q, vers laquelle les signaux transmis sont acheminés dans le récepteur, une unité de mélange de fréquence (M) pour la correspondance de fréquence et une unité de détecteur (GI), à l'aide de laquelle la longueur utile maximale actuelle des intervalles de garde pour la production des nouveaux symboles est déterminée, afin de rendre possible une correspondance adaptative de la longueur des fractions des intervalles de garde utilisées pour la formation des nouveaux symboles aux conditions d'émission dans le récepteur, où de nouveaux symboles de durée $M_1{}^*T_S$ sont produits et uniquement chaque $M_1$-ème coefficient est calculé via une sélection adaptée de l'algorithme FFT.

5. Circuit selon la revendication 4, **caractérisé en ce que** la première unité (IQ) se compose d'un convertisseur A/N et d'un filtre numérique.

Fig. 1A

Fig. 1B

2N-FFT

$f_{tr} = 1/Ts$

Fig. 1C

a1  a2  a3  a4  a5  a6  a7  a8  a9  a10 a11

f

Fig. 2

(Ts-Tv)/2        $T_s$        Tv    (Ts-Tv)/2

Fig. 3A

Ts

Ts/2        1 3Ts/2

0    br                            b2N-r

Ts                2T        0

b1,b2,..    ..,bN/2,bN/2+1,..        ..,b3N/2,b3N/2+1..    .,b2N

Fig. 3B

2N-FFT

$f_{tr} = 1/Ts$

a1        a3        a5            a2N-3    a2N-1        f
a2        a4        a6    a2N-4    a2N-2    a2N

Fig. 3C

Fig. 4A

Fig. 4B

Fig. 4C

Fig. 5A

Fig. 5B

Fig. 6A

Fig. 6B

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 613267 A